# EUROPÄISCHE PATENTANMELDUNG

(11) **EP 3 692 776 A1**
(43) Veröffentlichungstag der Anmeldung: **12.08.2020**
(21) Anmeldenummer: 19213604.2
(22) Anmeldetag: 04.12.2019
(51) Int. Cl.: A01B 23/02, A01B 23/04, A01B 25/00, A01B 19/10, A01B 63/04, A01C 5/06, A01B 49/02, A01B 49/06, A01B 19/02, A01B 13/08

(54) **LANDWIRTSCHAFTLICHE BODENBEARBEITUNGSVORRICHTUNG**

(30) Priorität: 07.02.2019 DE 102019103043
(71) Anmelder: Lehermeier, Manfred, 94437 Mamming (DE)
(72) Erfinder: Lehermeier, Manfred, 94437 Mamming (DE)
(74) Vertreter: advotec.

(57) **Zusammenfassung**

Landwirtschaftliche Bodenbearbeitungsvorrichtung (1), umfassend ein an ein Zugfahrzeug ankoppelbares Traggestell (2) mit mindestens zwei hintereinander angeordneten Tragbalken (3, 4), wobei an einem hinteren Tragbalken (4) eine Mehrzahl von Grubberzinken (5) angeordnet ist, ferner umfassend eine Mehrzahl von mit einem vorderen Tragbalken (3) lösbar verbindbaren Sä-Hack-Einheiten (6), wobei jede Sä-Hack-Einheit (6) mindestens ein an einer Halterung (7) drehbar gelagertes Rad (8) sowie eine Befestigungseinrichtung (9) zur alternativen Befestigung eines Särohres (10) oder eines Hackwerkzeuges (11) aufweist, wobei am vorderen Tragbalken (3) mehrere nebeneinander angeordnete Befestigungseinrichtungen (12, 13) zur lösbaren Befestigung der Sä-Hack-Einheiten (6) angeordnet sind, wobei die Sä-Hack-Einheiten sowohl in einer Sä-als auch in einer Hackstellung am vorderen Tragbalken befestigbar sind.

## Beschreibung

Die vorliegende Erfindung betrifft eine landwirtschaftliche Bodenbearbeitungsvorrichtung, umfassend ein an ein Zugfahrzeug, wie beispielsweise Traktor, ankoppelbares Traggestell mit mindestens zwei hintereinander angeordneten Tragbalken, wobei an einem hinteren Tragbalken eine Mehrzahl von Grubberzinken angeordnet ist.

Derartige landwirtschaftliche Bodenbearbeitungsvorrichtungen sind aus dem Stand der Technik bekannt und wurden beispielsweise in AT 501 966 B1 beschrieben. Diese bekannten Bodenbearbeitungsvorrichtungen dienen in erster Linie dazu, den Boden aufzulockern, um beispielsweise die Aufnahme von Saatgut zu erleichtern. Eine weitere derartige Bodenbearbeitungsvorrichtung wird auch in DE 20 2009 010 188 U1 beschrieben. Dort wird ein Grubber mit einem an ein Zugfahrzeug ankoppelbaren Grundrahmen offenbart, an welchem mehrere nebeneinander angeordnete Grubberzinken sowie nachgeordnete Nivellier- oder Zustreichzinken zum Glätten des durch die Grubberzinken aufgerissenen Erdreichs angeordnet sind.

Des Weiteren sind aus dem Stand der Technik Sämaschinen zum Ausbringen von Saatgut auf ein Feld bekannt. So beschreibt z.B. DE 10 2006 031 243 A1 eine Sämaschine mit einem Rahmen, an dem in mehreren Querreihen hintereinander und seitlich versetzt auf Lücke zueinander in Höhenrichtung bewegbare Säschare angeordnet sind.

Die Säschare reißen dabei eine schmale Säfurche in den unbearbeiteten Boden, in die über eine Saatleitung Saatgut auf dem Grund der Säfurche abgelegt wird.

Eine ähnliche Sämaschine ist in DE 42 37 093 A1 offenbart.

Ferner sind aus dem Stand der Technik landwirtschaftliche Geräte zum Hacken bzw. Schneiden von Kulturpflanzen bekannt. So offenbart beispielsweise US 5,829,536 ein an ein Zugfahrzeug ankoppelbares Hackgerät, welches beispielsweise Schneidmesser zum Schneiden bzw. Hacken von Pflanzen aufweist.

Aus dem Stand der Technik sind also zahlreiche Bodenbearbeitungsvorrichtungen bekannt, mit Hilfe derer der Boden aufgelockert werden kann. Zudem sind Vorrichtungen zum Säen sowie Vorrichtungen zum Hacken von Pflanzen bekannt.

Der Nachteil der aus dem Stand der Technik bekannten landwirtschaftlichen Bodenbearbeitungsvorrichtungen besteht darin, dass für jede der oben beschriebenen Tätigkeiten eine separate Vorrichtung eingesetzt werden muss.

Der vorliegenden Erfindung liegt die Aufgabe zugrunde, eine landwirtschaftliche Bodenbearbeitungsvorrichtung zur Verfügung zu stellen, welche die Nachteile aus dem Stand überwindet.

Diese Aufgabe wird erfindungsgemäß durch eine landwirtschaftliche Bodenbearbeitungsvorrichtung der eingangs genannten Art gelöst, welche eine Mehrzahl von mit einem vorderen Tragbalken lösbar verbindbaren Sä-Hack-Einheiten umfasst, wobei jede Sä-Hack-Einheit mindestens ein an einer Halterung drehbar gelagertes Rad sowie eine Befestigungseinrichtung zur alternativen Befestigung eines Särohres oder eines Hackwerkzeuges aufweist, wobei am vorderen Tragbalken mehrere, nebeneinander angeordnete Befestigungseinrichtungen zur lösbaren Befestigung der Sä-Hack-Einheiten angeordnet sind, wobei die Sä-Hack-Einheiten sowohl in einer Sä- als auch in einer Hackstellung am vorderen Tragbalken befestigbar sind.

Bei dem o.g. Särohr kann es sich sowohl um ein starres Rohr als auch um einen flexibel ausgebildeten Schlauch handeln. Das Särohr dient dem Einleiten von Saatgut in den zu bearbeitenden Boden. Im Arbeitseinsatz der erfindungsgemäßen Bodenbearbeitungsvorrichtung ist diese an ein Zugfahrzeug gekoppelt und wird über den zu bearbeitenden Boden gezogen. Dabei sind die Tragbalken quer zur Fahrtrichtung angeordnet. Die Räder der Sä-Hack-Einheiten dienen zum einen zur Abstützung des Traggestells und zum Fahren desselben als auch zum Andrücken von unmittelbar vorher ausgebrachtem Saatgut am Boden. Unter dem Begriff "vorderer Tragbalken" des Traggestells wird im Arbeitseinsatz derjenige Tragbalken verstanden, welcher sich in Fahrtrichtung vor dem hinteren Tragbalken bzw. benachbart zum Zugfahrzeug befindet.

Unter einer Sästellung der Sä-Hack-Einheiten wird diejenige Stellung verstanden, bei welcher sich die Befestigungseinrichtungen der Sä-Hack-Einheiten in Fahrtrichtung gesehen vor den Rädern der Sä-Hack-Einheiten befinden. Dagegen wird unter einer Hack-Stellung diejenige Stellung verstanden, bei welcher sich die jeweiligen Befestigungseinrichtungen der Sä-Hack-Einheiten in Fahrtrichtung gesehen hinter den jeweiligen Rädern der Sä-Hack-Einheiten befinden. Zudem sind die Sä-Hack-Einheiten in einer Sästellung in der Regel versetzt zu den am hinteren Tragbalken angeordneten Grubberzinken angeordnet. In der Hack-Stellung dagegen sind die Sä-Hack-Einheiten in der Regel direkt vor den Grubberzinken angeordnet.

Mit der erfindungsgemäßen Bodenbearbeitungsvorrichtung ist es nun möglich, gleich drei unterschiedliche Arbeiten durchzuführen, nämlich den Boden mit Grubberzinken aufzubrechen bzw. aufzulockern, und gleichzeitig oder alternativ dazu zu säen oder zu hacken. Zum Säen müssen die am Traggestell angeordneten Sä-Hack-Einheiten lediglich in die Sästellung verbracht werden und anschließend müssen noch Särohre an die Sä-Hack-Einheiten angeordnet werden. Die Särohre sind in der Regel mit einem Saatgutreservoir verbunden, von welchem Saatgut in die Särohre geleitet wird. Im Arbeitseinsatz wird die erfindungsgemäße Bodenbearbeitungsvorrichtung mit den Särohren voran über einen zu bearbeitenden Boden gefahren. Die Särohre sind vor den Rädern der Sä-Hack-Einrichtungen angeordnet, sodass nach Ausbringen von Saatgut auf den Boden das Saatgut sogleich mit Hilfe der Räder am Boden angedrückt wird.

Zum Hacken bzw. Schneiden von Pflanzen müssen die Sä-Hack-Einheiten lediglich in die Hack-Stellung verbracht werden. Dazu werden zunächst die Särohre von den Befestigungseinrichtungen der Sä-Hack-Einheiten entfernt und die Sä-Hack-Einheiten vom vorderen Tragbalken gelöst. Anschließend werden die Sä-Hack-Einheiten lediglich um 180° gedreht und vorzugsweise in eine benachbarte Befestigungseinrichtung am vorderen Tragbalken befestigt. Schließlich müssen noch die Hack- bzw. Schneidwerkzeuge an den Sä-Hack-Einheiten angeordnet werden.

Bei einer besonders bevorzugten Ausführungsform der erfindungsgemäßen Bodenbearbeitungsvorrichtung sind die am vorderen Tragbalken angeordneten Befestigungseinrichtungen derart am vorderen Tragbalken angeordnet, dass jeweils eine Befestigungseinrichtung auf Höhe eines am hinteren Tragbalken angeordneten Grubberzinkens und die jeweils benachbart angeordneten Befestigungseinrichtungen versetzt zu den am hinteren Tragbalken angeordneten Grubberzinken am vorderen Tragbalken angeordnet sind. Durch diese Weise der Anordnung der Befestigungseinrichtungen ist es auf äußerst einfache Art und Weise möglich, die erfindungsgemäße Bodenbearbeitungsvorrichtung von einem Sä- in einen Hackzustand und umgekehrt zu überführen. Hierzu müssen die Sä-Hack-Einheiten lediglich von einer Befestigungseinrichtung gelöst und mit der benachbart angeordneten Befestigungseinrichtung verbunden werden, wobei die Sä-Hack-Einheiten vorher um 180° gedreht werden sollten. Je nachdem, welche Stellung gewünscht ist, befinden sich die Sä-Hack-Einheiten versetzt zu den oder in gleicher Linie wie die dahinter angeordneten Grubberzinken. In der Regel umfasst die erfindungsgemäße Befestigungseinrichtung eine Mehrzahl von lösbar am Traggestell fixierbaren Särohren und eine Mehrzahl von lösbar am Traggestell fixierbaren Hackwerkzeugen.

Mit Vorteil sind die Grubberzinken lösbar am Traggestell befestigt. So können die Grubberzinken nach Verschleiß in einfacher Art und Weise gewechselt werden. Auch ist es möglich, unterschiedliche Arten von Grubberzinken am Traggestell zu befestigen.

Mit Vorteil umfassen die am vorderen Tragbalken angeordneten, vorzugsweise identisch ausgebildeten Befestigungseinrichtungen jeweils eine Aufnahmehülse sowie mindestens eine in die Aufnahmehülse einschraubbare Befestigungsschraube, wobei die Sä-Hack-Einheiten jeweils einen in die jeweilige Aufnahmehülse einsteckbaren Befestigungsabschnitt, insbesondere Befestigungsholm aufweisen, wobei die Befestigungsabschnitte vorzugsweise an die Form der Aufnahmehülsen angepasst sind. Mit dieser Ausführungsform ist es auf einfache Art und Weise möglich, die Befestigungsabschnitte der Sä-Hack-Einheiten mit den am vorderen Tragbalken angeordneten Befestigungseinrichtungen zu verbinden. Weisen sowohl die Aufnahmehülsen als auch die Befestigungsabschnitte beispielsweise einen rechteckigen Querschnitt auf und sind die Innenumfänge der Aufnahmehülsen nur unwesentlich größer als die Außenumfänge der Befestigungsabschnitte wird erreicht, dass die Sä-Hack-Einheiten nur in zwei Stellungen, nämlich in einer Sä- oder in einer Hack-Stellung mit den Befestigungseinrichtungen verbunden werden können. Es ist dann also ausgeschlossen, dass die Sä-Hack-Einheiten beispielsweise so mit den Befestigungsabschnitten des vorderen Tragbalkens verbunden werden, dass sich die Räder der Sä-Hack-Einheiten quer zur Fahrtrichtung der Vorrichtung befinden.

Es ist also von Vorteil, dass die Befestigungsabschnitte derart mit den dazugehörigen Aufnahmehülsen korrespondieren, dass die Befestigungsabschnitte in einer ersten Stellung sowie in einer um 180° zur ersten Stellung verschwenkten zweiten Stellung in die Aufnahmehülsen einsteckbar sind.

Mit Vorteil umfassen die Befestigungseinrichtungen der Sä-Hack-Einheiten jeweils eine Aufnahmehülse zum Einstecken eines Särohres oder eines Hackwerkzeuges, wobei in die Aufnahmehülsen vorzugsweise jeweils mindestens eine Schraube zur besseren Fixierung der Särohre bzw. Hackwerkzeuge einschraubbar ist. Auf diese Art und Weise ist ein schnelles und einfaches Wechseln der Särohre bzw. Hackwerkzeuge möglich.

In der Regel umfasst jeder Grubberzinken einen Grubberstiel sowie eine am Grubberstiel vorgesehene Flügelschar sowie eine unterhalb der angeordnete Tiefenlockerungsschar. Dadurch kann der Boden in unterschiedlichen Ebenen bearbeitet werden.

Mit Vorteil umfassen die Grubberzinken jeweils ein sich in Längsrichtung der Grubberzinken erstreckendes Belüftungsrohr, welches sich vorzugsweise von einem Bereich oberhalb einer Flügelschar bis zu einem Bereich unterhalb der Flügelschar erstreckt und vorzugsweise am Grubberstiel angeordnet ist. Mit derartigen Grubberzinken ist es möglich, beim Bearbeiten des Bodens, insbesondere beim Aufbrechen und Auflockern des Bodens, Luft in den Boden einzubringen. Dadurch ist es wiederum möglich, ein sich beim Umgraben und Auflockern des Bodens entstehendes Vakuum auszugleichen.

Die vorliegende Erfindung betrifft ferner ein Kit, umfassend ein Haltegestell, mindestens eine am Haltegestell lösbar fixierbare Sä-Hack-Einheit, welche ein an einer Halterung drehbar gelagertes Rad sowie eine Befestigungseinrichtung zur alternativen Befestigung eines Särohres oder eines Hackwerkzeuges umfasst, ferner umfassend mindestens ein mit einem Saatgutreservoir koppelbares Särohr sowie mindestens ein Hackwerkzeug. Die Vorteile des erfindungsgemäßen Kits sind die gleichen wie bei der oben beschriebenen erfindungsgemäßen Bodenbearbeitungsvorrichtung.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: eine Rückseitenansicht einer erfindungsgemäßen Bodenbearbeitungsvorrichtung;
- Fig. 2:: eine Seitenansicht der Bodenbearbeitungsvorrichtung von Fig. 1;
- Fig. 3:: einen Ausschnitt aus der Bodenbearbeitungsvorrichtung von Fig. 1 in einer Sästellung;
- Fig. 4:: einen Ausschnitt aus der Bodenbearbeitungsvorrichtung von Fig. 1 in einer Hackstellung;

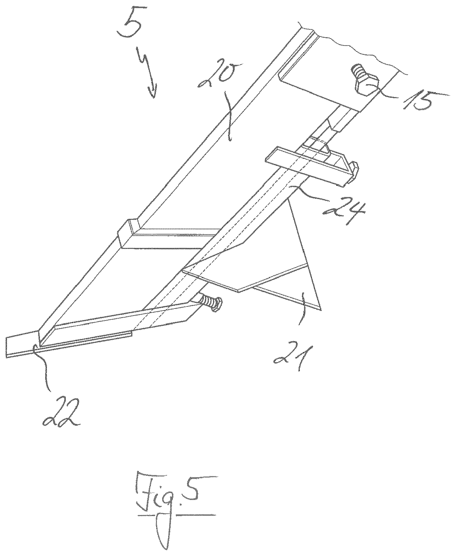

- Fig. 5:: eine perspektivische Darstellung eines unteren Bereichs eines Grubberzinkens der Vorrichtung von Fig. 1.

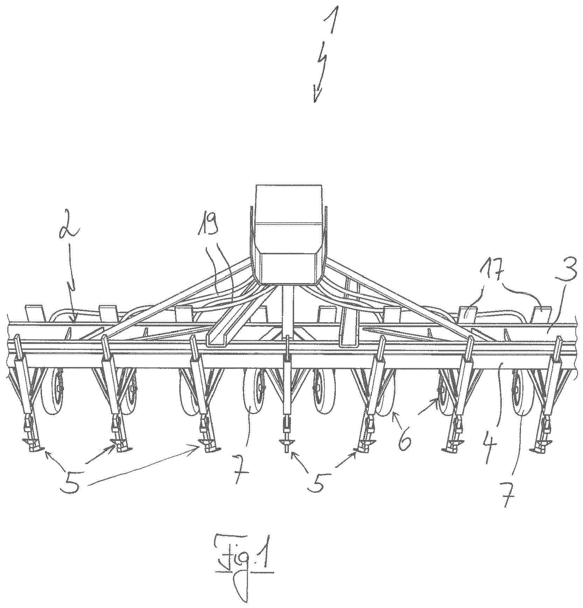

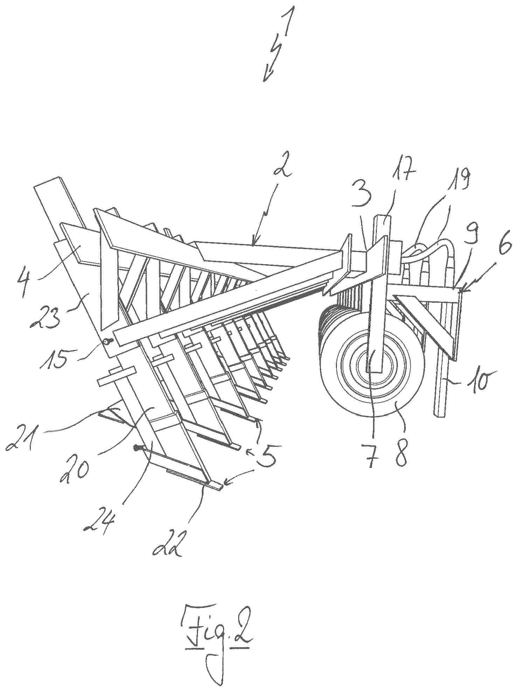

Figuren 1 bis 4 zeigen eine bzw. Ausschnitte einer erfindungsgemäßen Bodenbearbeitungsvorrichtung. Gleiche oder funktionsgleiche Elemente werden durch gleiche Bezugsziffern gekennzeichnet.

Die in den Figuren 1 bis 4 dargestellte Bodenbearbeitungsvorrichtung 1 umfasst ein an ein Zugfahrzeug ankoppelbares Traggestell 2. Das Traggestell 2 umfasst einen vorderen Tragbalken 3 sowie einen parallel zum vorderen Tragbalken 3 angeordneten hinteren Tragbalken 4. Der vordere Tragbalken 3 befindet sich im Arbeitseinsatz näher am Zugfahrzeug als der hintere Tragbalken 4. Am hinteren Tragbalken 4 ist eine Mehrzahl von Grubberzinken 5 angeordnet. Die Grubberzinken 5 dienen u.a. dem Auflockern und Aufbrechen des zu bearbeitenden Bodens.

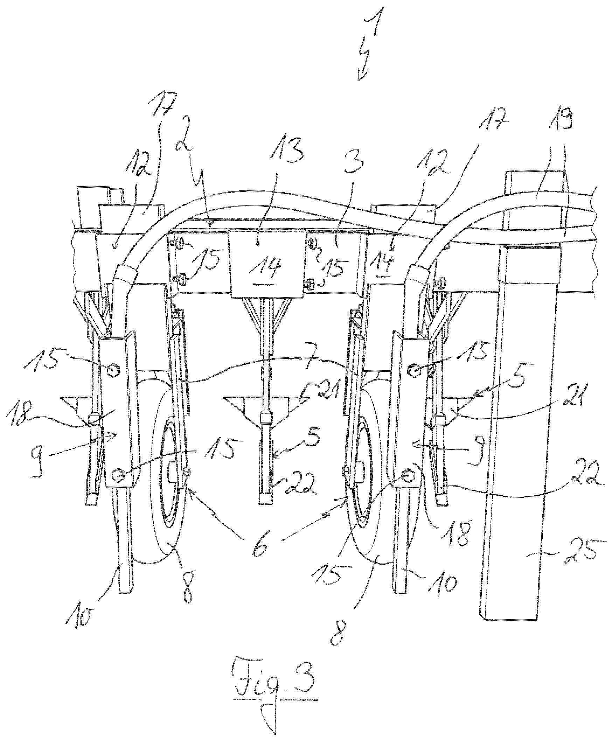

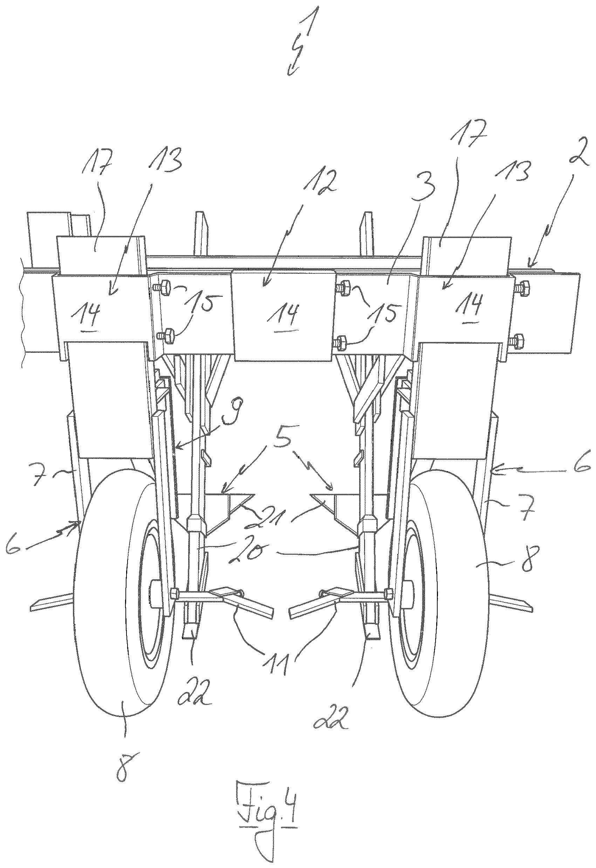

Die Bodenbearbeitungsvorrichtung 1 umfasst ferner eine Mehrzahl von mit dem vorderen Tragbalken 3 lösbar verbundenen Sä-Hack-Einheiten 6. Jede Sä-Hack-Einheit 6 weist ein an einer Halterung 7 drehbar gelagertes Rad 8 sowie eine Befestigungseinrichtung 9 zur alternativen Befestigung eines Särohres 10 oder eines Hackwerkzeuges 11 auf. Zur lösbaren Befestigung der Sä-Hack-Einheiten 6 sind am vorderen Tragbalken 3 mehrere nebeneinander angeordnete Befestigungseinrichtungen 12, 13 angeordnet. Die Befestigungseinrichtungen 12 und 13 sind in den Figuren 3 und 4 gut zu erkennen. Die Befestigungseinrichtungen 12 und 13 umfassen eine Aufnahmehülse 14 sowie zwei in die Aufnahmehülse 14 einschraubbare Befestigungsschrauben 15. Die Sä-Hack-Einheiten 6 weisen jeweils einen in die jeweilige Aufnahmehülse 14 einsteckbaren Befestigungsholm 17 auf, wobei die Befestigungsholme 17 der Sä-Hack-Einheiten an die Form der Aufnahmehülsen 14 angepasst sind.
Die am vorderen Tragbalken 3 angeordneten Befestigungseinrichtungen 12, 13 sind derart am vorderen Tragbalken 3 angeordnet, dass jeweils eine Befestigungseinrichtung 12 auf Höhe eines am hinteren Tragbalken 4 angeordneten Grubberzinkens 5 und die jeweils benachbart angeordnete Befestigungseinrichtung 13 versetzt zu den am hinteren Tragbalken 4 angeordneten Grubberzinken 5 am vorderen Tragbalken 3 angeordnet sind.

Die Befestigungsholme 17 weisen einen rechteckigen Querschnitt auf. Auch die Aufnahmehülsen 14 weisen einen rechteckigen Querschnitt auf, wobei die Form und Größe der Aufnahmehülsen 14 derart gewählt sind, dass die Befestigungsholme 17 gerade noch in die Aufnahmehülsen 14 eingeschoben werden können.

Mit der erfindungsgemäßen Vorrichtung 1 ist es nun in äußerst einfacher Art und Weise möglich, diese von einer Sästellung (siehe Fig. 3) in eine Hackstellung (siehe Fig. 4) und umgekehrt zu überführen. In der in Fig. 3 dargestellten Sästellung befinden sich die Sä-Hack-Einheiten 6 versetzt zu den Grubberzinken 5, die am hinteren Tragbalken 4 angeordnet sind. In der Sästellung befinden sich Särohre 10 in Aufnahmehülsen 18 der Befestigungseinrichtungen 9. Die Särohre 10 sind in den Aufnahmehülsen 18 mittels Schrauben 15 fixiert. Die Särohre sind über Einspeiseschläuche 19 mit einem hier nicht dargestellten Saatgutreservoir verbunden. Im Arbeitseinsatz beim Säen wird Saatgut über die Särohre 10 auf dem zu bestellenden Boden abgelegt. Die dahinter angeordneten Räder 8 drücken dann das Saatgut am Boden an. Durch die dahinter und versetzt angeordneten Grubberzinken 5 wird der Boden nicht nur aufgelockert, sondern es wird auch das am Boden abgelegte Saatgut mit Erdreich bedeckt.

Zum Überführen der Vorrichtung 1 von der Sästellung in die Hackstellung werden zunächst die Schrauben 15 in den Aufnahmehülsen 18 gelockert und die Särohre 10 werden aus den Aufnahmehülsen 18 gezogen. Dann werden die Schrauben 15 aus den Aufnahmehülsen 14 etwas herausgeschraubt und die Sä-Hack-Einheiten 6 werden aus den Aufnahmehülsen 14 gezogen. Anschließend werden die Sä-Hack-Einheiten 6 um 180° gedreht und in den benachbart angeordneten Aufnahmehülsen 14 durch Einschrauben der Schrauben 15 fixiert. Die Aufnahmehülsen 18 befinden sich nun in Fahrtrichtung hinter dem jeweiligen Rad 8. In den Aufnahmehülsen 18 wird nun jeweils ein Hackwerkzeug 11 befestigt. Nun befindet sich die Vorrichtung 1 in der in Fig. 4 dargestellten Hackstellung. In dieser befinden sich die Grubberzinken 5 direkt hinter den Rädern 8 der Sä-Hack-Einheiten 6 und hinter den Hackwerkzeugen 11.

Auch die Grubberzinken 5 sind lösbar am hinteren Tragbalken 4 fixiert. Jeder Grubberzinken 5 umfasst einen Grubberstiel 20, eine am Grubberstiel 20 vorgesehene Flügelschar 21 sowie eine unterhalb der Flügelschar 21 angeordnete Tieflockerungsschar 22. Die Grubberzinken 5 sind über ihre Grubberstiele 20 in Aufnahmehülsen 23 eingepasst und dort mittels Schrauben 15 fixiert. Die Grubberzinken 5 weisen jeweils ein sich in Längsrichtung des Grubberzinkens, insbesondere in Längsrichtung des Grubberstiels 20 erstreckendes Belüftungsrohr 24 auf. Dieses Belüftungsrohr erstreckt sich von einem Bereich oberhalb der Flügelschar 21 bis zu einem Bereich unterhalb der Flügelschar 21. Das Belüftungsrohr, welches im vorliegenden Ausführungsbeispiel einen rechteckigen Querschnitt aufweist, endet kurz oberhalb der Tiefenlockerungsschar 22. Die Belüftungsrohre 24 der Grubberzinken 5 dienen einer verbesserten Bodenbearbeitung, indem diese ein beim Durchpflügen des Bodens entstehendes Vakuum ausgleichen können. Dadurch wird eine verbesserte Bodenbearbeitung möglich.

In Fig. 3 ist in einer der Befestigungsvorrichtungen 12 ein Aufbockholm 25 zum Aufbocken der gesamten Vorrichtung 1 dargestellt. Durch die Fixierung mindestens eines solchen Aufbockholmes ist es möglich, die Sä-Hack-Einheiten 6 beabstandet vom Boden zu halten, um diese auswechseln zu können.

## Patentansprüche

1. Landwirtschaftliche Bodenbearbeitungsvorrichtung (1), umfassend ein an ein Zugfahrzeug ankoppelbares Traggestell (2) mit mindestens zwei hintereinander angeordneten Tragbalken (3, 4), wobei an einem hinteren Tragbalken (4) eine Mehrzahl von Grubberzinken (5) angeordnet ist, ferner umfassend eine Mehrzahl von mit einem vorderen Tragbalken (3) lösbar verbindbaren Sä-Hack-Einheiten (6), wobei jede Sä-Hack-Einheit (6) mindestens ein an einer Halterung (7) drehbar gelagertes Rad (8) sowie eine Befestigungseinrichtung (9) zur alternativen Befestigung eines Särohres (10) oder eines Hackwerkzeuges (11) aufweist, wobei am vorderen Tragbalken (3) mehrere nebeneinander angeordnete Befestigungseinrichtungen (12, 13) zur lösbaren Befestigung der Sä-Hack-Einheiten (6) angeordnet sind, wobei die Sä-Hack-Einheiten sowohl in einer Sä-als auch in einer Hackstellung am vorderen Tragbalken befestigbar sind.

2. Bodenbearbeitungsvorrichtung nach Anspruch 1, **dadurch gekennzeichnet, dass** die am vorderen Tragbalken (3) angeordneten Befestigungseinrichtungen (12, 13) derart am vorderen Tragbalken (3) angeordnet sind, dass diese abwechselnd auf Höhe eines am hinteren Tragbalken (4) angeordneten Grubberzinkens (5) und versetzt zu den am hinteren Tragbalken (4) angeordneten Grubberzinken am vorderen Tragbalken (3) angeordnet sind.

3. Bodenbearbeitungsvorrichtung nach einem der Ansprüche 1 oder 2, **dadurch gekennzeichnet, dass** sie eine Mehrzahl von lösbar am Traggestell (2) fixierbaren Särohren (10) und eine Mehrzahl von lösbar am Traggestell (2) fixierbaren Hackwerkzeugen (11) umfasst.

4. Bodenbearbeitungsvorrichtung nach einem der vorhergehenden Ansprüche, **dadurch gekennzeichnet, dass** die Grubberzinken (5) lösbar am Traggestell (2) befestigt sind.

5. Bodenbearbeitungsvorrichtung nach einem der vorhergehenden Ansprüche, **dadurch gekennzeichnet, dass** die am vorderen Tragbalken (3) angeordneten, vorzugsweise identisch ausgebildeten Befestigungseinrichtungen (12, 13) jeweils eine Aufnahmehülse (14) sowie eine in die Aufnahmehülse einschraubbare Befestigungsschraube (15) umfassen, wobei die Sä-Hack-Einheiten (6) jeweils einen in die jeweilige Aufnahmehülse (14) einsteckbaren Befestigungsabschnitt (17) aufweisen, wobei die Befestigungsabschnitte (17) vorzugsweise an die Form und Größe der Aufnahmehülsen (14) angepasst sind.

6. Bodenbearbeitungsvorrichtung nach Anspruch 5, **dadurch gekennzeichnet, dass** die Befestigungsabschnitte (17) derart mit den dazugehörigen Aufnahmehülsen (14) korrespondieren, dass die Befestigungsabschnitte (17) in einer ersten Stellung sowie in einer um 180° zur ersten Stellung verschwenkten zweiten Stellung in die Aufnahmehülsen (14) einsteckbar sind.

7. Bodenbearbeitungsvorrichtung nach einem der vorhergehenden Ansprüche, **dadurch gekennzeichnet, dass** die Befestigungseinrichtungen (9) der Sä-Hack-Einheiten (6) jeweils eine Aufnahmehülse (18) zum Einstecken eines Särohres (10) oder eines Hackwerkzeugs (11) umfassen, wobei in die jeweilige Aufnahmehülse (18) vorzugsweise mindestens eine Schraube (15) zur besseren Fixierung eines Särohres (10) bzw. Hackwerkzeuges (11) einschraubbar ist.

8. Bodenbearbeitungsvorrichtung nach einem der vorhergehenden Ansprüche, **dadurch gekennzeichnet, dass** jeder Grubberzinken (5) einen Grubberstiel (20) sowie eine am Grubberstiel (20) vorgesehene Flügelschar (21) sowie eine unterhalb der Flügelschar angeordnete Tiefenlockerungsschar (22) umfasst.

9. Bodenbearbeitungsvorrichtung nach einem der vorhergehenden Ansprüche, **dadurch gekennzeichnet, dass** jeder Grubberzinken (5) ein sich in Längsrichtung des Grubberzinkens erstreckendes Belüftungsrohr (24) umfasst, welches sich vorzugsweise von einem Bereich oberhalb einer Flügelschar (21) bis zu einem Bereich unterhalb der Flügelschar (21) erstreckt und vorzugsweise an einem Grubberstiel (20) angeordnet ist.

10. Kit, umfassend
a) ein Traggestell (2);
b) mindestens eine am Traggestell (2) lösbar fixierbare Sä-Hack-Einheit (6), welche ein an einer Halterung (7) drehbar gelagertes Rad (8) sowie eine Befestigungseinrichtung (9) zur alternativen Befestigung eines Särohres (10) oder eines Hackwerkzeuges (11) umfasst;
c) mindestens ein mit einem Saatgutreservoir koppelbares Särohr (10) sowie
d) mindestens ein Hackwerkzeug (11).
